# DEMANDE DE BREVET EUROPEEN

(11) **EP 4 599 687 A1**
(43) Date de publication de la demande: **13.08.2025**
(21) Numéro de dépôt: 25157504.9
(22) Date de dépôt: 12.02.2025
(51) Int. Cl.: A23G 9/16, A23G 9/22, A23P 30/10, A23B 2/80

(54) **PORTIONS CONGELÉES, SURGELÉES ET/OU CRYOGÉNISÉES DE PRODUITS LIQUIDES OU VISQUEUX**

(30) Priorité: 12.02.2024 FR 2401362
(71) Demandeur: Marie Surgeles, 86110 Mirebeau (FR)
(72) Inventeur: Boulineau, Bruno, 86110 Mirebeau (FR); Razanabola, Sarah, 86110 Mirebeau (FR)
(74) Mandataire: Tripoz, Inès

(57) **Abrégé**

La présente invention concerne le domaine de la fabrication de portions congelées, surgelées et/ou cryogénisées de produit liquide ou pâteux et en particulier de la fabrication des produits IQF et en particulier un équipement pour la congélation et/ou la surgélation en portions de produits liquides ou pâteux comprenant ou non au moins un élément solide, comprenant un tapis convoyeur continu et des moyens d'entrainement dudit tapis convoyeur continu caractérisé en ce que le tapis convoyeur continu comprend au moins un moule ouvert uniquement dans sa partie supérieure et constitué d'au moins un matériau élastomère ayant une température de transition vitreuse inférieure à 0°C ainsi que le procédé de fabrication correspondant.

## Description

La présente invention concerne le domaine de la fabrication de portions congelées, surgelées et/ou cryogénisées de produits liquides ou visqueux et en particulier de la fabrication des produits IQF.

Un produit IQF (Individually Quick Frozen) est un produit ayant subi une technique de congélation et/ou surgélation permettant à chaque ingrédient d'être congelé et/ou surgelé individuellement.

Ils sont en particulier utilisés pour la fabrication de portion de sauces surgelées en forme de galets, encore appelées « pellets » de sauce. Ces pellets sont utilisés dans les plats cuisinés en raison de la commodité d'emploi.

La fabrication de produits congelés et/ou surgelés en portions tels que les produits IQF (Individually Quick Frozen) présente plusieurs défis technologiques.

L'un des problèmes majeurs réside dans l'adhérence des portions pendant le processus de congélation, de surgélation et/ou de cryogénisation, résultant en des agglomérats difficiles à séparer, altérant la qualité et l'apparence des produits finis, compromettant ainsi la commodité attendue des portions.

De plus, les difficultés de démoulage représentent un obstacle majeur, entraînant des pertes de temps et de matière lors de la préparation des portions.

Différentes technologies ont été envisagées dans l'art antérieur.

La demande WO2006/092535 divulgue un procédé de fabrication de glaçons de produits liquides ou pâteux caractérisé par la mise en oeuvre d'un tapis alvéolé sans fond situé en regard d'une zone refroidie qui sert de fond au moule partiel que constituent les alvéoles. La zone refroidie est préférentiellement la plaque métallique d'un échangeur à liquide cryogénique, cette zone refroidie assurant la surgélation du produit liquide ou pâteux.

De la même façon, la demande WO97/23141 divulgue un équipement pour la congélation de matériaux en blocs comprenant des moules en matériaux flexibles ouverts dans leurs parties supérieure et inférieure, c'est-à-dire des alvéoles, convoyés le long d'une zone refroidie servant de fond au moule et de zone d'apport de froid.

Les équipements selon ces deux demandes ne permettent de créer que des formes ayant nécessairement deux faces planes, la première étant constituée par la zone de contact avec la zone refroidie servant de fond au moule, et la seconde formée par gravité à la suite du remplissage du moule.

La demande EP4279846 divulgue un équipement de fabrication de pastilles de produits liquides ou pâteux, comportant un tunnel et comportant un tapis convoyeur comprenant des moules en inox, ladite demande insistant sur l'avantage de l'utilisation de l'inox par rapport aux matières polymères afin d'éviter l'adhésion du produit liquide ou pâteux.

Les équipements présentés dans l'art antérieur nécessitent un pré refroidissement des éléments constitutifs des moules lors de l'étape de remplissage afin d'assurer le « croutage » du produit liquide ou pâteux par la formation d'une couche surgelée au contact dudit moule de manière à éviter que le produit ne coule par les interstices formés par les différentes pièces constitutives du moule. De plus, les tapis convoyeurs exclusivement constitués de métaux présentent une masse en mouvement très élevée. Ces deux éléments conduisent à une dépense énergétique de fonctionnement très importante.

En outre, l'utilisation de moules en métaux rend également difficile, voire impossible, la création de portions aux formes complexes en particulier non démoulable facilement.

De manière tout à fait surprenante, la demanderesse a mis au point un équipement pour la congélation, la surgélation et/ou de cryogénisation en portions de produits liquides ou pâteux, comprenant ou non au moins un élément solide, comprenant un tapis convoyeur continu et des moyens d'entrainement dudit tapis convoyeur continu caractérisé en ce que le tapis convoyeur continu comprend au moins un moule ouvert uniquement dans sa partie supérieure et constitué d'au moins un matériau élastomère ayant une température de transition vitreuse inférieure à 0°C permettant de résoudre l'ensemble des problèmes techniques rencontrés avec les technologies de l'art antérieur.

En raison de leurs températures de transition vitreuse, les moules de l'équipement selon la présente invention restent rigides lors de la congélation, la surgélation et/ou cryogénisation. Ils conservent donc leurs formes et permettent la formation d'une couche périphérique continue et rigide et retrouvent leur souplesse par retour à une température supérieure à la température de transition vitreuse, permettant de ne pas casser le moule lors des opérations de démoulage et de ne pas altérer le produit surgelé. Ainsi, le dispositif ne nécessite pas la mise en place d'un artefact de procédé pour contrecarrer la non-étanchéité de l'alvéole ou du moule.

Ils ont par ailleurs une masse bien plus faible que leurs équivalents métalliques.

Ces deux dernières caractéristiques permettent de réduire significativement la dépense énergétique de fonctionnement de l'équipement selon l'invention.

La température de transition vitreuse de la matière élastomère du moule garantit par ailleurs sa souplesse aux températures au-dessus de celle-ci, assurant un démoulage facile, fiable et sans risque de reliquat organique (matière restant dans le moule après évacuation) sans nécessité de recours à l'ajout d'ingrédients technologiques tels que les additifs de démoulage dans les produits liquides ou pâteux mis en oeuvre. L'absence de reliquats est cruciale dans les procédés de l'industrie alimentaire pour des raisons d'hygiène comme de maitrise des poids, le moule devant être continuellement vide lors du remplissage au fil des cycles.

Le cas échéant, les moules de l'équipement selon la présente invention pouvant être facilement inversés et/ou retournés, c'est-à-dire passés de forme concave à convexe, ils sont donc par ailleurs facilement nettoyables.

L'équipement mis au point par la demanderesse présente par ailleurs l'avantage de permettre la création de formes et de tailles de moules et donc de portions presque infinies, les différentes formes et tailles de moules pouvant être associées dans un même cycle de production à l'aide de l'équipement selon l'invention. Il présente en particulier l'avantage de permettre le démoulage de formes non démoulables naturellement, en particulier lorsque la section d'entrée du moule est inférieure ou égale à la plus grande section du moule.

Il permet d'assurer la production de portions de produits très liquides à très visqueux, y compris d'eau, a des cadences élevées sans que le produit liquide ne déborde, et donc sans perte, lors de son convoyage aval.

L'équipement selon l'invention présente également l'avantage de permettre de procéder à la congélation, surgélation et/ou cryogénisation de produits liquides en portions de façon précise, et fiable, avec des résultats constants et reproductibles. Ces avantages permettent par ailleurs de contribuer à réduire les pertes de production liées à des variations inattendues.

Il permet par ailleurs un grand contrôle de la qualité du produit surgelé, en particulier une meilleure uniformité de la portion finale, sans marque de démoulage.

De manière surprenante, la Demanderesse a également mis au point un moule constitué d'un matériau élastomère comprenant un mélange ou un copolymère d'élastomère de silicone et d'au moins un autre matériau élastomère. Ces moules sont beaucoup plus résistants à l'usure dans le cadre d'une utilisation industrielle de congélation, de surgélation et/ou de cryogénisation à haut débit que les seuls moules constitués de silicones qui craquent où rompent dans les mêmes conditions. A très faible température, telles que celles employées selon la présente invention, ils conservent en outre une souplesse permettant d'assurer le démoulage en appliquant une contrainte mécanique sur le moule.

Un premier objet de la présente invention concerne un équipement pour la congélation, la surgélation et/ou la cryogénisation en portions de produits liquides ou pâteux comprenant ou non au moins un élément solide, comprenant un tapis convoyeur continu et des moyens d'entrainement dudit tapis convoyeur continu caractérisé en ce que le tapis convoyeur continu comprend au moins un moule ouvert uniquement dans sa partie supérieure et constitué d'au moins un matériau élastomère ayant une température de transition vitreuse inférieure à 0°C, ledit équipement comportant successivement dans sens d'entraînement du tapis convoyeur continu les zones suivantes :
- au moins une zone a) de remplissage des moules,
- au moins une zone b) d'apport de froid,
- au moins une zone c) de démoulage,
- au moins une zone d) de remise en forme du moule.

L'ensemble des modes de réalisation ci-après cités peuvent être combinés les uns avec les autres et selon l'invention signifie selon l'invention ci-dessus décrite selon les modes de réalisation précédemment cités seuls ou en combinaison.

Dans un mode de réalisation, l'équipement selon l'invention est caractérisé en ce que les zones a), b), c) et/ou d) sont comprises dans un seul et même appareil.

Dans un mode de réalisation, l'équipement selon l'invention est caractérisé en ce que les zones a), b), c) et d) sont comprises dans un seul et même appareil.

Dans un mode de réalisation, le produit liquide ou pâteux est un produit alimentaire.

Dans un mode de réalisation, le produit liquide ou pâteux est un produit alimentaire choisi dans le groupe comprenant une sauce, un condiment, une purée et/ou un jus.

Dans un mode de réalisation, le produit liquide ou pâteux comprend au moins un élément solide.

Dans un mode de réalisation, le produit liquide ou pâteux comprend ne comprend pas d'élément solide.

Dans un mode de réalisation, l'élément solide comprend au moins un élément choisi parmi les morceaux de fruits, de légumes, de viande, de fromages, de condiments de plantes aromatiques, et/ou des graines, des épices, de l'ail, des amandes et/ou des pépites de chocolat.

Dans un mode de réalisation, l'équipement selon l'invention est caractérisé en ce que la zone a) de remplissage des moules comprend au moins un moyen de dosage de la quantité de produits liquides ou pâteux, comprenant ou non au moins un élément solide, à disposer dans chaque moule.

Dans un mode de réalisation, le moyen de dosage est un dispositif mécanique, électronique, électromécanique et/ou électromagnétique.

Dans un mode de réalisation, l'équipement selon l'invention est caractérisé en ce que la zone a) de remplissage des moules comprend au moins un moyen de remplissage.

Dans un mode de réalisation, l'équipement selon l'invention est caractérisé en ce que le moyen de remplissage est apte à la réalisation de produits simples, multicouches, concentriques, twistés et/ou de textures /ou de consistances différentes.

Dans un mode de réalisation, l'équipement selon l'invention est caractérisé en ce que le moyen de remplissage comprend une ou plusieurs buses.

Dans un mode de réalisation, l'équipement selon l'invention est caractérisé en ce que le moyen de remplissage comprend un dispositif de dépose d'un élément solide.

Dans un mode de réalisation, l'équipement selon l'invention est caractérisé en ce que la zone a) de remplissage des moules est à une température comprise dans un intervalle allant de 0°C à 25°C.

Dans un mode de réalisation, l'équipement selon l'invention est caractérisé en ce que la zone a) de remplissage des moules est à une température comprise dans un intervalle allant de 5 °C à 15°C.

Dans un mode de réalisation, le moule ouvert uniquement dans sa partie supérieure est un moule à empreinte et/ou un moule à motif.

Dans un mode de réalisation, au moins un moule présente une forme définie par son volume intérieur comprenant des variations de hauteur, de profondeur, de texture, et/ou de section différentes sur la hauteur.

Dans un mode de réalisation, au moins un moule présente une section d'entrée inférieure ou égale à la plus grande section du moule.

Dans un mode de réalisation, l'équipement selon l'invention est apte au démoulage de moules présentant une section d'entrée inférieure à la plus grande section du moule.

Il est entendu que l'équipement sera dit « apte au démoulage » si la portion obtenue est telle que définie par la forme du volume intérieur du moule de manière conforme et répétable.

Dans un mode de réalisation, au moins un moule présente une forme définie par son volume intérieur de parallélépipède et/ou d'amande.

Dans un mode de réalisation, au moins un moule présente au moins un embossage positif ou négatif.

Dans un mode de réalisation, l'équipement selon l'invention est caractérisé en ce qu'il comprend au moins deux moules de formes identiques ou différentes.

Dans un mode de réalisation, l'équipement selon l'invention est caractérisé en ce qu'il comprend au moins deux moules de formes identiques.

Dans un mode de réalisation, l'équipement selon l'invention est caractérisé en ce qu'il comprend au moins deux moules de formes différentes.

Dans un mode de réalisation le moule ouvert uniquement dans sa partie supérieure est monobloc.

Au sens de la présente invention, on entend par « monobloc » l'aspect indémontable du moule pris dans son ensemble. Le terme monobloc pourra être remplacé notamment par « d'un seul tenant ». Il s'oppose en particulier aux moules comprenant une portion supérieure et inférieure séparables.

Dans un mode de réalisation, le matériau élastomère présente une température de transition vitreuse comprise dans un intervalle allant de -120°C à 0°C.

Dans un mode de réalisation, le matériau élastomère présente une température de transition vitreuse comprise dans un intervalle allant de -100°C à 0°C.

Dans un mode de réalisation, le matériau élastomère présente une température de transition vitreuse comprise dans un intervalle allant de -90°C à -20°C.

Dans un mode de réalisation, le matériau élastomère présente une température de transition vitreuse comprise dans un intervalle allant de -80°C à -30°C.

Dans un mode de réalisation, le matériau élastomère présente une température de transition vitreuse comprise dans un intervalle allant de -75°C à -40°C.

Dans un mode de réalisation, le matériau élastomère présente une température de transition vitreuse comprise dans un intervalle allant de -120°C à -60°C.

Dans un mode de réalisation, le matériau élastomère présente une température de rupture fragile comprise dans un intervalle allant de -150°C à -90°C.

Dans un mode de réalisation, le matériau élastomère présente une température de rupture fragile comprise dans un intervalle allant de -120°C à -100°C.

Dans un mode de réalisation, le matériau élastomère présente une température de rupture fragile comprise dans un intervalle allant de -115°C à -105°C.

Au sens de la présente invention, on entend par « température de rupture fragile » ou « britlle point » en anglais, la température en dessous de laquelle le matériau élastomère devient fragile et cassant sous l'effet d'une contrainte mécanique.

La température de rupture fragile est mesurée selon la norme ASTM D2137-11(2018).

Dans un mode de réalisation, le matériau élastomère présente une dureté comprise dans un intervalle allant de 20 à 80 SHORE A mesurée selon la norme ASTM2240.

Dans un mode de réalisation, le matériau élastomère présente une dureté comprise dans un intervalle allant de 30 à 70 SHORE A mesurée selon la norme ASTM2240.

Dans un mode de réalisation, le matériau élastomère présente une dureté comprise dans un intervalle allant de 40 à 60 SHORE A mesurée selon la norme ASTM2240.

Dans un mode de réalisation, le matériau élastomère est choisi dans le groupe comprenant les élastomères nitriles, les copolymères butadiène-acrylonitrile, le NBR, les élastomères fluorocarbonés, les élastomères de silicone, le chloroprène, les élastomères d'alcools polyvinyliques, les latex, et/ou les caoutchoucs, notamment le caoutchouc nitrile, et/ou le caoutchouc éthylène-propylène-diène (EPDM).

Dans un mode de réalisation, le matériau élastomère est un élastomère de silicone.

Dans un mode de réalisation, les silicones sont choisis dans le groupe comprenant : le polydiméthylsiloxane (PDMS), le polyméthylvinylsiloxane (PMVS) et/ou le polyméthylhydrogénosiloxane (PMHS).

Dans un mode de réalisation, le matériau élastomère comprend un mélange ou un copolymère d'élastomère de silicone et d'au moins un autre matériau élastomère.

Dans un mode de réalisation, l'au moins un autre matériau élastomère est vulcanisé ou réticulé.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -120°C à 0°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -100°C à 0°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -90°C à -20°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -80°C à -30°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -75°C à -40°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -120°C à -60°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM).

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -120°C à 0°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -100°C à 0°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -90°C à -20°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -80°C à -30°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -75°C à -40°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -120°C à -60°C.

Dans un mode de réalisation, le matériau élastomère est compatible avec une utilisation avec les denrées alimentaires.

Dans un mode de réalisation, le matériau élastomère est conforme à la norme NF EN 1186 (Edition janvier 2003) et/ou à la norme NF EN 13130-1 (Edition aout 2004).

Dans un mode de réalisation, l'équipement selon l'invention est caractérisé en ce que le tapis convoyeur continu comprend une armature articulée.

Dans un mode de réalisation, l'équipement selon l'invention est caractérisé en ce que le tapis convoyeur continu comprend au moins un moyen d'entrainement positif.

Dans un mode de réalisation, l'équipement selon l'invention est caractérisé en ce que le tapis convoyeur continu comprend une armature articulée en métal.

Dans un mode de réalisation, l'équipement selon l'invention est caractérisé en ce que le tapis convoyeur continu est disposé longitudinalement dans l'équipement.

Dans un mode de réalisation, l'équipement selon l'invention est caractérisé en ce que le tapis convoyeur continu comprend des moyens de soutien et/ou de fixation des moules.

Dans un mode de réalisation, le tapis a une taille et/ou une vitesse, adaptées à un temps de cycle de 3 à 120 minutes.

Dans un mode de réalisation, le tapis a une taille et/ou une vitesse, adaptées à un temps de cycle de 5 à 60 minutes.

Au sens de la présente invention, on entend par « temps de cycle » le temps nécessaire pour qu'un moule effectue toutes les étapes de l'équipement, c'est-à-dire le temps nécessaire pour que le moule effectue une révolution complète et revienne au point de départ sur le tapis convoyeur.

Dans un mode de réalisation, le tapis a une taille adaptée à un temps de cycle de 3 à 120 minutes.

Dans un mode de réalisation, le tapis a une taille adaptée à un temps de cycle de 5 à 60 minutes.

Dans un mode de réalisation, le tapis a une vitesse adaptée à un temps de cycle de 3 à 120 minutes.

Dans un mode de réalisation, le tapis a une vitesse adaptée à un temps de cycle de 5 à 60 minutes.

Au sens de la présente invention, on entend par « portion » la forme du produit liquide ou pâteux congelé, surgelé et/ou cryogénisé au moyen de l'équipement selon l'invention. La portion est définie par le volume intérieur du moule.

Dans un mode de réalisation, la portion présente une masse comprise dans un intervalle allant de 1 g à 1000 g.

Dans un mode de réalisation, la portion présente une masse comprise dans un intervalle allant de 5 g à 500 g.

Dans un mode de réalisation, la portion présente une masse comprise dans un intervalle allant de 10 g à 100 g.

Dans un mode de réalisation, la portion présente une masse comprise dans un intervalle allant de 15 g à 50 g.

Dans un mode de réalisation, la portion présente une masse comprise dans un intervalle allant de 15 g à 30 g.

Dans un mode de réalisation, la portion présente une masse comprise dans un intervalle allant de 20 g à 30 g.

Dans un mode de réalisation, la portion correspond à une dose unitaire pour un plat surgelé.

Dans un mode de réalisation, la portion est un produit IQF (Individually Quick Frozen).

Dans un mode de réalisation, la portion présente une forme comprenant des variations de hauteurs, de profondeurs et/ou de textures.

Dans un mode de réalisation, l'équipement selon l'invention est apte au démoulage de portions présentant des formes comprenant des variations de hauteurs, de profondeurs et/ou de textures.

Dans un mode de réalisation, l'équipement selon l'invention est caractérisé en ce que la zone b) d'apport de froid est à une température inférieure ou égale à la température de transition vitreuse du matériau élastomère.

Dans un mode de réalisation, l'équipement selon l'invention est caractérisé en ce que la zone b) d'apport de froid est à une température inférieure à la température de transition vitreuse du matériau élastomère.

Dans un mode de réalisation, l'équipement selon l'invention est caractérisé en ce que la zone b) d'apport de froid comprend au moins un moyen de congélation, de surgélation et/ou de cryogénisation de tout ou partie des produits liquides ou pâteux en portions.

Dans un mode de réalisation, l'équipement selon l'invention est caractérisé en ce que la zone b) d'apport de froid comprend au moins un moyen de croûtage des produits liquides ou pâteux en portions.

Au sens de la présente invention, on entend par « croûtage » l'étape de congélation, de surgélation et/ou de cryogénisation permettant le durcissement uniquement de la couche externe de la portion. Elle s'oppose à la surgélation à coeur.

Dans un mode de réalisation, l'équipement selon l'invention est caractérisé en ce que la zone b) d'apport de froid comprend au moins un moyen de congélation, de surgélation et/ou de cryogénisation à coeur des produits liquides ou pâteux en portions.

Dans un mode de réalisation, l'équipement selon l'invention est caractérisé en ce que la zone b) d'apport de froid comprend au moins un tunnel de congélation, surgélation et/ou cryogénisation.

Dans un mode de réalisation, l'équipement selon l'invention est caractérisé en ce que la zone b) d'apport de froid comprend au moins deux tunnels de surgélation.

Dans un mode de réalisation, l'équipement selon l'invention est caractérisé en ce que la zone b) d'apport de froid comprend au moins un tunnel de surgélation destiné au croûtage des produits liquides ou pâteux en portions et au moins un tunnel de surgélation destiné à la congélation, de surgélation et/ou de cryogénisation à coeur des produits liquides ou pâteux en portions.

Dans un mode de réalisation, l'équipement selon l'invention est caractérisé en ce que la zone b) d'apport de froid est à une température est comprise dans un intervalle allant de -110°C à 0°C.

Dans un mode de réalisation, l'équipement selon l'invention est caractérisé en ce que la zone b) d'apport de froid est à une température est comprise dans un intervalle allant de -100°C à -20°C.

Dans un mode de réalisation, l'équipement selon l'invention est caractérisé en ce que la zone b) d'apport de froid est à une température est comprise dans un intervalle allant de -90°C à -50°C.

Dans un mode de réalisation, l'équipement selon l'invention est caractérisé en ce que la zone b) d'apport de froid est à une température est comprise dans un intervalle allant de -85°C à -65°C.

Dans un mode de réalisation, l'équipement selon l'invention est caractérisé en ce que la zone b) d'apport de froid comprend au moins un équipement de refroidissement mécanique et/ou cryogénique.

Dans un mode de réalisation, l'équipement selon l'invention est caractérisé en ce que la zone b) d'apport de froid comprend au moins un équipement de refroidissement mécanique.

Dans un mode de réalisation, l'équipement selon l'invention est caractérisé en ce que la zone b) d'apport de froid comprend au moins un équipement de refroidissement cryogénique.

Dans un mode de réalisation, l'équipement selon l'invention est caractérisé en ce que la zone b) d'apport de froid comprend au moins un équipement de refroidissement cryogénique par trempage, pulvérisation et/ou ventilation d'au moins un fluide frigorigène.

Dans un mode de réalisation, le au moins un fluide frigorigène est l'azote, l'oxygène liquide et/ou dioxyde de carbone (CO₂).

Dans un mode de réalisation, le au moins un fluide frigorigène est l'azote.

Dans un mode de réalisation, l'équipement selon l'invention est caractérisé en ce que seul la zone b) d'apport de froid est réfrigérée dans l'équipement.

Dans un mode de réalisation, l'équipement selon l'invention est caractérisé en ce que la durée du transit d'un moule dans la zone b) d'apport de froid est compris dans un intervalle allant de 3 à 20 minutes.

Dans un mode de réalisation, l'équipement selon l'invention est caractérisé en ce que la durée du transit d'un moule dans la zone b) d'apport de froid est compris dans un intervalle allant de 4 à 15 minutes.

Dans un mode de réalisation, l'équipement selon l'invention est caractérisé en ce que la durée du transit d'un moule dans la zone b) d'apport de froid est compris dans un intervalle allant de 5 à 10 minutes.

Dans un mode de réalisation, l'équipement selon l'invention est caractérisé en ce que la durée du transit d'un moule dans la zone b) d'apport de froid est compris dans un intervalle allant de 6 à 9 minutes.

Dans un mode de réalisation, l'équipement selon l'invention est caractérisé en ce que le temps de congélation, de surgélation et/ou de cryogénisation est compris dans un intervalle allant de 3 à 20 minutes.

Dans un mode de réalisation, l'équipement selon l'invention est caractérisé en ce que le temps de congélation, de surgélation et/ou de cryogénisation est compris dans un intervalle allant de 4 à 15 minutes.

Dans un mode de réalisation, l'équipement selon l'invention est caractérisé en ce que le temps de congélation, de surgélation et/ou de cryogénisation est compris dans un intervalle allant de 5 à 10 minutes.

Dans un mode de réalisation, l'équipement selon l'invention est caractérisé en ce que le temps de congélation, de surgélation et/ou de cryogénisation est compris dans un intervalle allant de 6 à 9 minutes.

La zone c) de démoulage de l'équipement selon l'invention permet l'éjection de la portion hors du moule.

Dans un mode de réalisation, l'équipement selon l'invention est caractérisé en ce que la zone c) de démoulage est à une température supérieure à la température de transition vitreuse du matériaux élastomère.

Dans un mode de réalisation, l'équipement selon l'invention est caractérisé en ce que la zone c) de démoulage est à une température comprise dans un intervalle allant de 0 à 25°C.

Dans un mode de réalisation, l'équipement selon l'invention est caractérisé en ce que la zone c) de démoulage est à une température comprise dans un intervalle allant de 5 °C à 15°C.

Dans un mode de réalisation, l'équipement selon l'invention est caractérisé en ce que la zone c) de démoulage comprend au moins un moyen de démoulage mécanique et/ou au moins un moyen d'amener le moule à une température supérieure sa température de transition vitreuse.

Dans un mode de réalisation, l'équipement selon l'invention est caractérisé en ce que la zone c) de démoulage comprend un moyen de démoulage mécanique.

Dans un mode de réalisation, l'équipement selon l'invention est caractérisé en ce que la zone c) de démoulage comprend un moyen de démoulage mécanique par torsion, par flexion, par pression et/ou par déformation.

Dans un mode de réalisation, l'équipement selon l'invention est caractérisé en ce que la zone c) de démoulage comprend un moyen de démoulage mécanique choisi dans le groupe comprenant un arbre comprenant ou non au moins une empreinte positive et/ou un poinçon.

Dans un mode de réalisation, l'équipement selon l'invention est caractérisé en ce que la zone c) de démoulage comprend un moyen de démoulage mécanique comprenant un arbre comprenant au moins une empreinte positive.

Dans un mode de réalisation, l'équipement selon l'invention est caractérisé en ce que la zone c) de démoulage comprend un moyen de démoulage mécanique comprenant au moins un poinçon.

Dans un mode de réalisation, l'équipement selon l'invention est caractérisé en ce que la zone c) de démoulage comprend au moins un moyen pour porter le moule à une température supérieure à sa température de transition vitreuse.

Dans un mode de réalisation, l'équipement selon l'invention est caractérisé en ce que la zone c) de démoulage comprend au moins un moyen pour porter le moule à une température supérieure à sa température de transition vitreuse choisi dans le groupe comprenant les moyens radiatifs, électro-magnétiques, convectifs et/ou un temps suffisant à la température ambiante de zone de démoulage.

La zone d) de remise en forme du moule de l'équipement selon la présente invention permet de remettre le moule dans sa forme initiale à la suite du démoulage et avant le remplissage du moule.

Dans un mode de réalisation, l'équipement selon l'invention est caractérisé en ce que la zone d) de remise en forme du moule comprend au moins un moyen mécanique de remise en forme du moule.

Dans un mode de réalisation, l'équipement selon l'invention est caractérisé en ce que la zone d) de remise en forme du moule comprend au moins un moyen mécanique de remise en forme du moule choisi dans le groupe comprenant un arbre comprenant ou non au moins une empreinte positive et/ou un poinçon.

Dans un mode de réalisation, l'équipement selon l'invention est caractérisé en ce que la zone d) de remise en forme du moule comprend au moins un moyen mécanique de remise en forme du moule comprenant un arbre comprenant au moins une empreinte positive.

Dans un mode de réalisation, l'équipement selon l'invention est caractérisé en ce que la zone d) de remise en forme du moule comprend au moins un moyen mécanique de remise en forme du moule comprenant au moins un poinçon.

Dans un mode de réalisation, l'équipement selon l'invention est caractérisé en ce qu'il comprend en outre une zone e) de stockage des produits liquides ou pâteux congelés, surgelés et/ou cryogénisés en portions par l'équipement.

Dans un mode de réalisation, l'équipement selon l'invention est caractérisé en ce que la zone e) de stockage des produits liquides ou pâteux congelés, surgelés et/ou cryogénisés en portions par l'équipement est consécutive à la zone c) de démoulage dans sens d'entrainement du tapis convoyeur continu.

Dans un mode de réalisation, l'équipement selon l'invention est caractérisé en ce qu'il comprend une trémie de pré-stockage entre la zone c) de démoulage dans le sens d'entrainement du tapis convoyeur continu et la zone e) de stockage des produits liquides ou pâteux congelés, surgelés et/ou cryogénisés en portions par l'équipement.

Dans un mode de réalisation, la zone e) de stockage des produits liquides ou pâteux congelés, surgelés et/ou cryogénisés en portions par l'équipement comprend un moyen d'emballage de la ou des portions.

Dans un mode de réalisation, le moyen d'emballage de la ou des portions est apte à la mise en sachet de la ou des portions.

La présente invention concerne également un procédé de fabrication automatisé de portions obtenues par congélation, surgélation et/ou cryogénisation de produits liquides ou pâteux comprenant ou non au moins un élément solide, comprenant au moins les étapes de :
1. Remplissage avec au moins un produit liquide ou pâteux d'au moins un moule ouvert uniquement dans sa partie supérieure et constitué d'au moins un matériau élastomère ayant une température de transition vitreuse inférieure à 0°C,
2. Congélation, surgélation et/ou cryogénisation,
3. Démoulage et obtention d'au moins une portion,
4. Remise en forme du moule,
5. Retour vers la zone de remplissage.

Dans un mode de réalisation, le procédé de fabrication selon la présente invention est caractérisé en ce qu'il est mis en oeuvre dans un équipement tel que précédemment défini.

Dans un mode de réalisation, le procédé de fabrication selon la présente invention est caractérisé en ce que les étapes 1, 2, 3, 4 et/ou 5 sont mises en oeuvre dans un seul et même appareil.

Dans un mode de réalisation, le procédé de fabrication selon la présente invention est caractérisé en ce que les étapes 1, 2, 3, 4 et 5 sont mises en oeuvre dans un seul et même appareil.

Dans un mode de réalisation, le procédé de fabrication selon la présente invention est caractérisé en ce que le produit liquide ou pâteux est tel que précédemment défini.

Dans un mode de réalisation, le procédé de fabrication selon la présente invention est caractérisé en ce que le produit liquide ou pâteux est un produit alimentaire.

Dans un mode de réalisation, le procédé de fabrication selon la présente invention est caractérisé en ce que le produit liquide ou pâteux est un produit alimentaire choisi dans le groupe comprenant une sauce, un condiment, une purée et/ou un jus.

Dans un mode de réalisation, le procédé de fabrication selon la présente invention est caractérisé en ce que le produit liquide ou pâteux comprend au moins un élément solide.

Dans un mode de réalisation, le procédé de fabrication selon la présente invention est caractérisé en ce que le produit liquide ou pâteux comprend ne comprend pas d'élément solide.

Dans un mode de réalisation, le procédé de fabrication selon la présente invention est caractérisé en ce que l'élément solide comprend au moins un élément choisi parmi les morceaux de fruits, de légumes, de viande, de fromages, de condiments de plantes aromatiques, et/ou des graines, des épices, de l'ail, des amandes et/ou des pépites de chocolat.

Dans un mode de réalisation, le procédé de fabrication selon la présente invention est caractérisé en ce que les portions sont telles que précédemment définies.

Dans un mode de réalisation, le procédé de fabrication selon la présente invention est caractérisé en ce que la portion présente une masse comprise dans un intervalle allant de 1 g à 1000 g.

Dans un mode de réalisation, le procédé de fabrication selon la présente invention est caractérisé en ce que la portion présente une masse comprise dans un intervalle allant de 5 g à 500 g.

Dans un mode de réalisation, le procédé de fabrication selon la présente invention est caractérisé en ce que la portion présente une masse comprise dans un intervalle allant de 10 g à 100 g.

Dans un mode de réalisation, le procédé de fabrication selon la présente invention est caractérisé en ce que la portion présente une masse comprise dans un intervalle allant de 15 g à 50 g.

Dans un mode de réalisation, le procédé de fabrication selon la présente invention est caractérisé en ce que la portion présente une masse comprise dans un intervalle allant de 15 g à 30 g.

Dans un mode de réalisation, le procédé de fabrication selon la présente invention est caractérisé en ce que la portion présente une masse comprise dans un intervalle allant de 20 g à 30 g.

Dans un mode de réalisation, le procédé de fabrication selon la présente invention est caractérisé en ce que la portion correspond à une dose unitaire pour un plat surgelé.

Dans un mode de réalisation, le procédé de fabrication selon la présente invention est caractérisé en ce que la portion est un produit IQF (Individually Quick Frozen).

Dans un mode de réalisation, le procédé de fabrication selon la présente invention est caractérisé en ce que la portion présente une forme comprenant des variations de hauteurs, de profondeurs et/ou de textures.

Dans un mode de réalisation, le procédé de fabrication selon la présente invention est caractérisé en ce que l'étape 1. de remplissage est réalisée à une température comprise dans un intervalle allant de 0°C à 25°C

Dans un mode de réalisation, le procédé de fabrication selon la présente invention est caractérisé en ce que l'étape 1. de remplissage est réalisée à une température comprise dans un intervalle allant de 5°C à 15°C.

Dans un mode de réalisation, le procédé de fabrication selon la présente invention est caractérisé en ce que l'étape 1. de remplissage comprend en outre la dépose d'au moins un élément solide dans le moule.

Dans un mode de réalisation, le procédé de fabrication selon la présente invention est caractérisé en ce que l'étape 1. de remplissage comprend la réalisation de produits simples, multicouches, concentriques, twistés et/ou de textures /ou de consistances différentes.

Dans un mode de réalisation, le procédé de fabrication selon la présente invention est caractérisé en ce que le moule est tel que précédemment défini.

Dans un mode de réalisation, le procédé de fabrication selon la présente invention est caractérisé en ce que le moule ouvert uniquement dans sa partie supérieure est un moule à empreinte et/ou un moule à motif.

Dans un mode de réalisation, le procédé de fabrication selon la présente invention est caractérisé en ce qu'au moins un moule présente une forme définie par son volume intérieur comprenant des variations de hauteur, de profondeur, de texture, et/ou de section différentes sur la hauteur.

Dans un mode de réalisation, le procédé de fabrication selon la présente invention est caractérisé en ce qu'au moins un moule présente une section d'entrée inférieure ou égale à la plus grande section du moule.

Dans un mode de réalisation, le procédé de fabrication selon la présente invention est caractérisé en ce qu'au moins un moule présente une forme définie par son volume intérieur de parallélépipède et/ou d'amande.

Dans un mode de réalisation, le procédé de fabrication selon la présente invention est caractérisé en ce qu'au moins un moule présente au moins un embossage positif ou négatif.

Dans un mode de réalisation, le procédé de fabrication selon la présente invention est caractérisé en ce qu'au moins deux moules de formes identiques ou différentes.

Dans un mode de réalisation, le procédé de fabrication selon la présente invention est caractérisé en ce qu'au moins deux moules de formes identiques.

Dans un mode de réalisation, le procédé de fabrication selon la présente invention est caractérisé en ce qu'au moins deux moules de formes différentes.

Dans un mode de réalisation, le procédé de fabrication selon la présente invention est caractérisé en ce que le moule ouvert uniquement dans sa partie supérieure est monobloc.

Dans un mode de réalisation, le procédé de fabrication selon la présente invention est caractérisé en ce que le matériau élastomère est tel que précédemment défini.

Dans un mode de réalisation, le matériau élastomère présente une température de transition vitreuse comprise dans un intervalle allant de -120°C à 0°C.

Dans un mode de réalisation, le matériau élastomère présente une température de transition vitreuse comprise dans un intervalle allant de -100°C à 0°C.

Dans un mode de réalisation, le matériau élastomère présente une température de transition vitreuse comprise dans un intervalle allant de -90°C à -20°C.

Dans un mode de réalisation, le matériau élastomère présente une température de transition vitreuse comprise dans un intervalle allant de -80°C à -30°C.

Dans un mode de réalisation, le matériau élastomère présente une température de transition vitreuse comprise dans un intervalle allant de -75°C à -40°C.

Dans un mode de réalisation, le matériau élastomère présente une température de transition vitreuse comprise dans un intervalle allant de -120°C à -60°C.

Dans un mode de réalisation, le matériau élastomère présente une température de rupture fragile comprise dans un intervalle allant de -150°C à -90°C.

Dans un mode de réalisation, le matériau élastomère présente une température de rupture fragile comprise dans un intervalle allant de -120°C à -100°C.

Dans un mode de réalisation, le matériau élastomère présente une température de rupture fragile comprise dans un intervalle allant de -115°C à -105°C.

Dans un mode de réalisation, le matériau élastomère présente une dureté comprise dans un intervalle allant de 20 à 80 SHORE A mesurée selon la norme ASTM2240.

Dans un mode de réalisation, le matériau élastomère présente une dureté comprise dans un intervalle allant de 30 à 70 SHORE A mesurée selon la norme ASTM2240.

Dans un mode de réalisation, le matériau élastomère présente une dureté comprise dans un intervalle allant de 40 à 60 SHORE A mesurée selon la norme ASTM2240.

Dans un mode de réalisation, le matériau élastomère est choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM).

Dans un mode de réalisation, le matériau élastomère est un élastomère de silicone.

Dans un mode de réalisation, les silicones sont choisis dans le groupe comprenant : le polydiméthylsiloxane (PDMS), le polyméthylvinylsiloxane (PMVS) et/ou le polyméthylhydrogénosiloxane (PMHS).

Dans un mode de réalisation, le matériau élastomère comprend un mélange ou un copolymère d'élastomère de silicone et d'au moins un autre matériau élastomère.

Dans un mode de réalisation, l'au moins un autre matériau élastomère est vulcanisé ou réticulé.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -120°C à 0°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -100°C à 0°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -90°C à -20°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -80°C à -30°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -75°C à -40°C.

Dans un mode de réalisation, le matériau élastomère comprend un mélange ou un copolymère d'élastomère de silicone et d'au moins un autre matériau élastomère, et présente une température de transition vitreuse comprise dans un intervalle allant de -120°C à -60°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM).

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -120°C à 0°C

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -100°C à 0°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -90°C à -20°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -80°C à -30°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -75°C à -40°C.

Dans un mode de réalisation, le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM), et présente une température de transition vitreuse comprise dans un intervalle allant de -120°C à -60°C.

Dans un mode de réalisation, le matériau élastomère est compatible avec une utilisation avec les denrées alimentaires.

Dans un mode de réalisation, le matériau élastomère est conforme à la norme NF EN 1186 (Edition janvier 2003) et/ou à la norme NF EN 13130-1 (Edition aout 2004).

Dans un mode de réalisation, le procédé de fabrication selon la présente invention est caractérisé en ce qu'il est réalisé en une durée comprise dans un intervalle allant de 3 à 120 minutes.

Dans un mode de réalisation, le procédé de fabrication selon la présente invention est caractérisé en ce qu'il est réalisé en une durée comprise dans un intervalle allant de 5 à 60 minutes.

Dans un mode de réalisation, le procédé de fabrication selon la présente invention est caractérisé en ce qu'il est réalisé en une durée comprise dans un intervalle allant de 3 à 120 minutes.

Dans un mode de réalisation, le procédé de fabrication selon la présente invention est caractérisé en ce qu'il est réalisé en une durée comprise dans un intervalle allant de 5 à 60 minutes.

Dans un mode de réalisation, le procédé de fabrication selon la présente invention est caractérisé en ce que l'étape 1. de remplissage comprend le chargement d'une masse de produits liquides ou visqueux comprise dans un intervalle allant de 1 g à 1000 g.

Dans un mode de réalisation, le procédé de fabrication selon la présente invention est caractérisé en ce que l'étape 1. de remplissage comprend le chargement d'une masse de produits liquides ou visqueux comprenant ou non au moins un élément solide comprise dans un intervalle allant de 5 g à 500 g.

Dans un mode de réalisation, le procédé de fabrication selon la présente invention est caractérisé en ce que l'étape 1. de remplissage comprend le chargement d'une masse de produits liquides ou visqueux comprenant ou non au moins un élément solide comprise dans un intervalle allant de 10 g à 100 g.

Dans un mode de réalisation, le procédé de fabrication selon la présente invention est caractérisé en ce que l'étape 1. de remplissage comprend le chargement d'une masse de produits liquides ou visqueux comprenant ou non au moins un élément solide comprise dans un intervalle allant de 15 g à 50 g.

Dans un mode de réalisation, le procédé de fabrication selon la présente invention est caractérisé en ce que l'étape 1. de remplissage comprend le chargement d'une masse de produits liquides ou visqueux comprenant ou non au moins un élément solide comprise dans un intervalle allant de 15 g à 30 g

Dans un mode de réalisation, le procédé de fabrication selon la présente invention est caractérisé en ce que l'étape 1. de remplissage comprend le chargement d'une masse de produits liquides ou visqueux comprenant ou non au moins un élément solide comprise dans un intervalle allant de 20 g à 30 g.

Dans un mode de réalisation, le procédé de fabrication selon la présente invention est caractérisé en ce que l'étape 2. de congélation, de surgélation et/ou de cryogénisation comprend au moins une étape de croutage des produits liquides ou pâteux en portions.

Dans un mode de réalisation, le procédé de fabrication selon la présente invention est caractérisé en ce que l'étape 2. de congélation, de surgélation et/ou de cryogénisation comprend au moins une étape de congélation, surgélation et/ou de cryogénisation à coeur des produits liquides ou pâteux en portions.

Dans un mode de réalisation, le procédé de fabrication selon la présente invention est caractérisé en ce que l'étape 2. de congélation, de surgélation et/ou de cryogénisation est réalisée à une température inférieure à la température de transition vitreuse du matériau élastomère.

Dans un mode de réalisation, le procédé de fabrication selon la présente invention est caractérisé en ce que l'étape 2. de congélation, de surgélation et/ou de cryogénisation est réalisée dans au moins un tunnel de congélation, de surgélation et/ou de cryogénisation Dans un mode de réalisation, le procédé de fabrication selon la présente invention est caractérisé en ce que l'étape 2. de congélation, de surgélation et/ou de cryogénisation est réalisée dans au moins deux tunnels de congélation, de surgélation et/ou de cryogénisation.

Dans un mode de réalisation, le procédé de fabrication selon la présente invention est caractérisé en ce que l'étape 2. de congélation, de surgélation et/ou de cryogénisation est réalisée dans au moins un tunnel de surgélation destiné au croutage des produits liquides ou pâteux en portions et au moins un tunnel de de congélation, de surgélation et/ou de cryogénisation destiné à la congélation, la surgélation et/ou la cryogénisation à coeur des produits liquides ou pâteux en portions.

Dans un mode de réalisation, le procédé de fabrication selon la présente invention est caractérisé en ce l'étape 2. de congélation, de surgélation et/ou de cryogénisation est réalisée à une température comprise dans un intervalle allant de - 110°C à 0°C.

Dans un mode de réalisation, le procédé de fabrication selon la présente invention est caractérisé en ce que l'étape 2. de congélation, de surgélation et/ou de cryogénisation est réalisée à une température comprise dans un intervalle allant de - 100°C à -20°C.

Dans un mode de réalisation, le procédé de fabrication selon la présente invention est caractérisé en ce que l'étape 2. de congélation, de surgélation et/ou de cryogénisation est réalisée à une température comprise dans un intervalle allant de - 90°C à -50°C.

Dans un mode de réalisation, le procédé de fabrication selon la présente invention est caractérisé en ce que l'étape 2. de congélation, de surgélation et/ou de cryogénisation est réalisée à une température comprise dans un intervalle allant de - 85°C à -65°C.

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement mécanique et/ou cryogénique.

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement mécanique.

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement cryogénique.

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement cryogénique par trempage, pulvérisation et/ou ventilation d'au moins un fluide frigorigène.

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement cryogénique par trempage, pulvérisation et/ou ventilation d'au moins un fluide frigorigène, ledit fluide frigorigène étant choisi dans le groupe comprenant l'azote, l'oxygène liquide et/ou dioxyde de carbone (CO₂).

Dans un mode de réalisation, le procédé de fabrication selon la présente invention est caractérisé en ce que l'étape 2. de congélation, de surgélation et/ou de cryogénisation est réalisée au moyen d'au moins un équipement de refroidissement cryogénique par trempage, pulvérisation et/ou ventilation d'au moins un fluide frigorigène, ledit fluide frigorigène étant l'azote.

Dans un mode de réalisation, le procédé de fabrication selon la présente invention est caractérisé en ce que l'étape 2. de congélation, de surgélation et/ou de cryogénisation est caractérisée en ce que le temps de congélation, de surgélation et/ou de cryogénisation est compris dans un intervalle allant de 3 à 20 minutes.

Dans un mode de réalisation, le procédé de fabrication selon la présente invention est caractérisé en ce que l'étape 2. de congélation, de surgélation et/ou de cryogénisation est caractérisée en ce que le temps de congélation, de surgélation et/ou de cryogénisation est compris dans un intervalle allant de 4 à 15 minutes.

Dans un mode de réalisation, le procédé de fabrication selon la présente invention est caractérisé en ce que l'étape 2. de congélation, de surgélation et/ou de cryogénisation est caractérisée en ce que le temps de congélation, de surgélation et/ou de cryogénisation est compris dans un intervalle allant de 5 à 10 minutes.

Dans un mode de réalisation, le procédé de fabrication selon la présente invention est caractérisé en ce que l'étape 2. de congélation, de surgélation et/ou de cryogénisation est caractérisée en ce que le temps de congélation, de surgélation et/ou de cryogénisation est compris dans un intervalle allant de 6 à 9 minutes.

Dans un mode de réalisation, le procédé de fabrication selon la présente invention est caractérisé en ce que l'étape 3. de démoulage est réalisée à une température supérieure à la température de transition vitreuse du matériau élastomère.

Dans un mode de réalisation, le procédé de fabrication selon la présente invention est caractérisé en ce que l'étape 3. de démoulage est réalisée à une température comprise dans un intervalle allant de 0 à 25°C.

Dans un mode de réalisation, le procédé de fabrication selon la présente invention est caractérisé en ce que l'étape 3. de démoulage est réalisée à une température comprise dans un intervalle allant de 5 °C à 15°C.

Dans un mode de réalisation, le procédé de fabrication selon la présente invention est caractérisé en ce que l'étape 3. de démoulage est réalisée par une action mécanique et/ou thermique.

Dans un mode de réalisation, le procédé de fabrication selon la présente invention est caractérisé en ce que l'étape 4. de remise en forme du moule permet la remise en forme d'au moins 95% des moules.

Dans un mode de réalisation, le procédé de fabrication selon la présente invention est caractérisé en ce que l'étape 4. de remise en forme du moule permet la remise en forme d'au moins 99% des moules.

Dans un mode de réalisation, le procédé de fabrication selon la présente invention est caractérisé en ce que l'étape 4. de remise en forme du moule permet la remise en forme de 100% des moules.

Dans un mode de réalisation, le procédé de fabrication selon la présente invention est caractérisé en ce qu'il comprend en outre une étape de surgélation à coeur après l'étape 2 et/ou 3.

Dans un mode de réalisation, le procédé de fabrication selon la présente invention est caractérisé en ce qu'il comprend en outre une étape de surgélation à coeur par post-surgélation et/ou pendant le stockage de la portion.

La figure 1 illustre un moule ouvert uniquement dans sa partie supérieure et constitué d'au moins un matériau élastomère utilisable selon l'invention.

La figure 2 illustre des portions de produits liquides ou pâteux surgelés au moyen de l'équipement selon l'invention.

La figure 3 illustre un tapis convoyeur continu comprenant des moules ouverts uniquement dans leurs parties supérieures selon l'invention.

La figure 4 illustre la déformabilité à basse température d'un moule issu d'un dispositif selon l'exemple 1 lorsqu'on applique une pression à l'intérieur de celui-ci.

La figure 5 illustre la déformabilité à basse température d'un moule issu d'un dispositif selon l'exemple 1 lorsqu'on applique une pression à l'intérieur de celui-ci.

### EXEMPLES

**Exemple 1. Réalisation d'une portion au moyen du dispositif selon l'invention.**

La demanderesse a réalisé des portions au moyen d'un dispositif selon l'invention caractérisé comme suit :

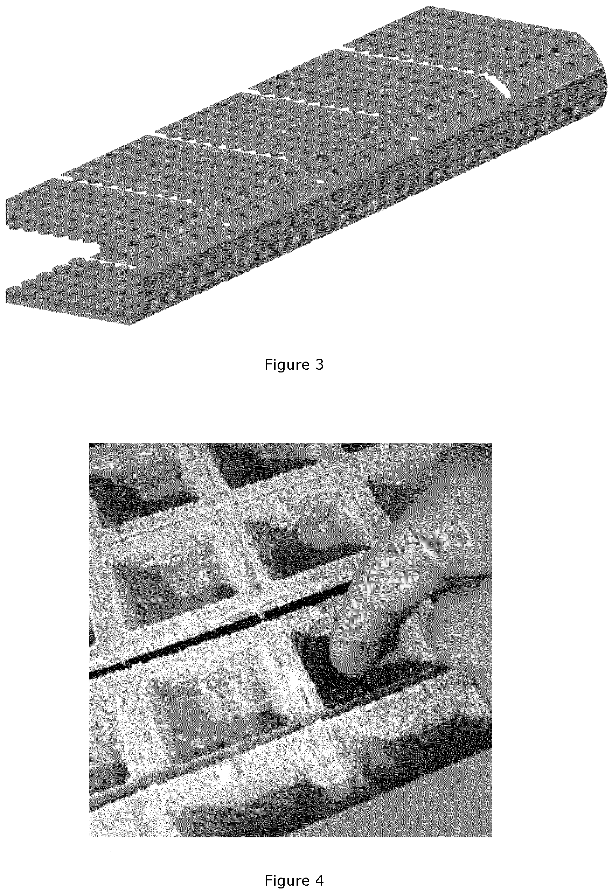

Tapis convoyeur :
- Tapis convoyeur comprenant 24 moules alignés sur une bande dans le sens de la largeur semblable à celui illustré en [Fig. 3] et comprenant en outre une armature articulée en métal et des dispositifs d'entrainement.

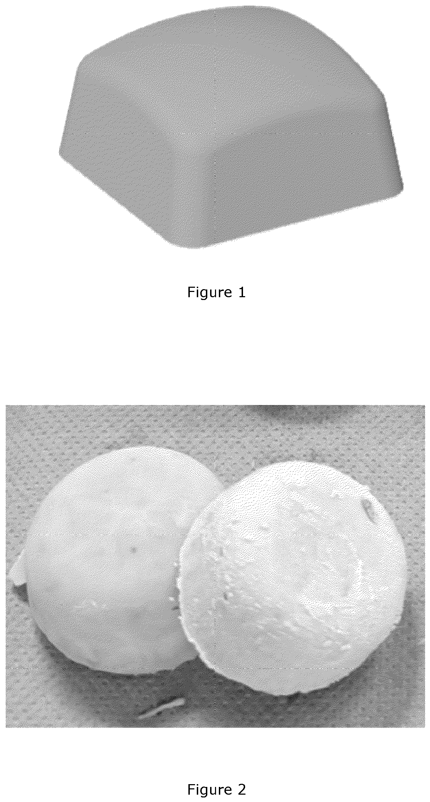

Moules :
- Moule à empreinte moule ouvert uniquement dans sa partie supérieure de dimensions 35x35x21mm constitué d'au moins un matériau élastomère tels que présenté en [Fig.1] et constitué d'élastomère de silicone alimentaire conforme à la norme NF EN 1186 et à la norme NF EN 13130-1 ayant une température de transition vitreuse de - 45 °C.et.

Zone de remplissage :
- Zone de remplissage comprenant un moyen de dosage apte au dépôt d'une quantité de 10 à 30 g de produit liquide ou pâteux dans chaque moule.

Zone d'apport de froid :
- Tunnel de surgélation par refroidissement cryogénique par ventilation d'azote liquide.
- Temps de cryogénisation : 8 minutes.
- Température cryogénisation : -70 °C.

Zone de démoulage :
- Démoulage par pistonnage d'une contre forme.

Zone de remise en forme du moule :
- Remise en forme du moule par pistonnage d'une contre forme.

Le procédé de réalisation de portion au moyen du dispositif selon l'invention est réalisé en atelier de production à une température contrôlée de 10°C, à l'exception du tunnel de surgélation. Le temps de cycle est d'environ 9 minutes. Le débit de production est de 424 (3x8) lignes par minutes, chaque ligne du tapis convoyeur comprenant 24 moules.

### Exemple 1.1. Réalisation de portions surgelées d'une sauce couscous,

Une sauce couscous est préparée sans ajout d'ingrédient technologique. Sa teneur en eau, en sel et en sucre est évaluée au moyen d'un logiciel de formulation. Sa viscosité est mesurée au moyen d'un VISCOSIMETRE (LAMY, FIRST PLUS). Les résultats sont récapitulés dans le tableau 1.

**Tableau 1**

| | Sauce couscous |
|---|---|
| Teneur en eau (%) | 73,5 |
| Teneur en sel (%) | 0,5 |
| Teneur en sucre (%) | 1,1 |
| Viscosité (Pa. s) | 0,800 |

La sauce couscous est disposée dans le réservoir du moyen de remplissage de la zone a) de remplissage du moule puis une quantité de 20,00g est dosée par le moyen de dosage et déposée dans chaque moule en passant au travers des buses de la zone de remplissage.

Les portions surgelées sont récupérées et pesées au moyen d'une balance de précision. Les résultats sont présentés dans le tableau 2.

**Tableau 2**

| | Portions de sauce couscous obtenues selon l'exemple 1.1 |
|---|---|
| Masse maximale mesurée (g) | 20,38 |
| Masse maximale mesurée (g) | 19,90 |
| Ecart type moyen (g) | 0,13 |

Une différence moyenne très faible, d'environ 1%, entre la masse de produit très liquide consistant en une sauce couscous déposée dans le moule et la masse de la portion surgelée est observée. Cette différence peut s'expliquer par des imprécisions de mesures, notamment des imprécisions du moyen de dosage ainsi que par des phénomènes d'évaporation de la sauce. Les portions obtenues ne présentent par ailleurs aucune marque de démoulage.

Ces résultats démontrent que malgré une teneur en eau supérieure à 70% et une viscosité très faible du produit liquide mis en oeuvre, le dispositif selon l'invention, permet un procédé de surgélation pour l'obtention de portions, très précis et fiable, dont les résultats sont constants et reproductibles.

Par ailleurs, aucun résidu n'est observé au fond des moules et l'ensemble des moules ont été remis en forme à la fin du cycle.

### Exemple 1.2. Réalisation de portions surgelées d'une sauce vakiniku.

Une sauce yakiniku est préparée sans ajout d'ingrédient technologique. Sa teneur en eau, en sel et en sucre ainsi que sa viscosité sont mesurées de la même façon que dans l'exemple 1.1. Les résultats sont présentés dans le tableau 3.

**Tableau 3**

| | Sauce yakiniku |
|---|---|
| Teneur en eau (%) | 54 |
| Teneur en sel (%) | 3,4 |
| Teneur en sucre (%) | 13 |
| Viscosité (Pa. s) | 1,164 |

La sauce yakiniku est disposée dans le réservoir du moyen de remplissage de la zone a) de remplissage du moule puis une quantité de 20,00g est dosée par le moyen de dosage et déposée dans chaque moule en passant au travers des buses de la zone de remplissage.

Les portions surgelées sont récupérées et pesées au moyen d'une balance de précision. Les résultats sont présentés dans le tableau 4.

**Tableau 4**

| | Portions de sauce yakiniku obtenues selon l'exemple 1.2 |
|---|---|
| Masse maximale mesurée (g) | 18,60 |
| Masse maximale mesurée (g) | 20,80 |
| Ecart type moyen (g) | 0,30 |

Une différence moyenne très faible, de 3%, entre la masse la sauce yakiniku déposée dans le moule et la masse de la portion surgelée est observée. Cette différence peut s'expliquer par des imprécisions de mesures, notamment des imprécisions du moyen de dosage ainsi que par des phénomènes d'évaporation de la sauce. Les portions obtenues ne présentent par ailleurs aucune marque de démoulage.

Ces résultats démontrent qu'avec une sauce beaucoup plus visqueuse que celle présentée en exemple 1.1. le dispositif selon l'invention, permet un procédé de surgélation et d'obtention de portions très précis, et fiable, aux résultats constants et reproductibles.

### Exemple 2. Réalisation d'une portion au moyen du dispositif selon l'invention comprenant un moule constitué d'un matériau élastomère comprenant un mélange ou un copolymère d'élastomère de silicone et d'au moins un autre matériau élastomère.

Les exemples 1 sont reproduits à l'identique à l'exception du moule à empreinte ouvert uniquement dans sa partie supérieure de dimensions 35x35x21mm qui est ici constitué de Ke 183 U (SHIN ETSU), comprenant un mélange ou un copolymère d'élastomère de silicone et d'au moins un autre matériau élastomère. Les résultats obtenus avec les mêmes sauces qu'aux exemples 1.1 et 1.2 ne permettent pas de différencier les produits, les différences moyennes entre les masses de produits très liquides déposées dans les moules et les masses des portions surgelées observées étant inférieures à 3 % quelles que soient les sauces.

### Exemple 3. Essais comparatifs de résistance à l'usure.

Les dispositifs selon les exemples 1 et 2 sont mis en oeuvre pendant 200 cycles de fonctionnement.

A l'issue de ces derniers, l'aspect des moules est observé.

Les moules du dispositif selon l'exemple 1 présentent des craquelures. A l'inverse, les moules du dispositif selon l'exemple 2 sont intacts.

L'utilisation d'un mélange ou de copolymères d'élastomères de silicone et d'au moins un autre élastomère permet d'augmenter la résistance des moules.

### Exemple 4. Essais comparatifs de résistance à la déformation.

Les dispositifs selon les exemples 1 et 2 sont mis en oeuvre et les moules sont récupérés à la sortie de la zone d'apport de froid.

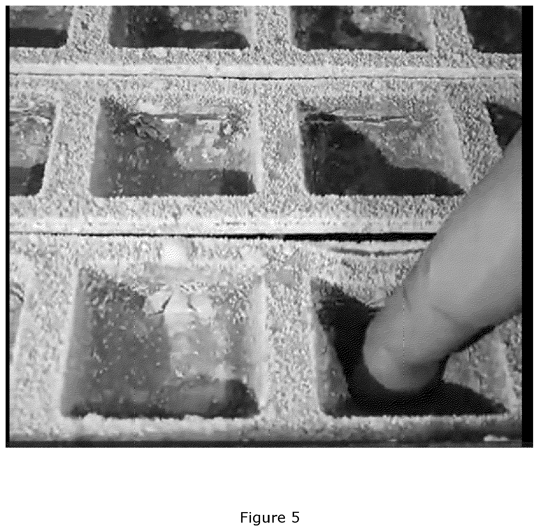

Une pression équivalente est appliquée avec un doigt à l'intérieur de chaque moule. Une photographie est prise pour les moules issus du dispositif selon l'exemple 1 (figure 4) et des moules issus du dispositif selon l'exemple 2 (figure 5).

On observe que les moules issus du dispositif selon l'exemple 1 présentent une moins bonne déformabilité, l'intégralité de la rangée de moules se pliant lors de la pression. Les moules issus du dispositif selon l'exemple 2 sont beaucoup plus déformables et absorbent la pression.

## Revendications

1. Equipement pour la congélation, la surgélation et/ou la cryogénisation en portions de produits liquides ou pâteux comprenant ou non au moins un élément solide, comprenant un tapis convoyeur continu et des moyens d'entraînement dudit tapis convoyeur continu **caractérisé en ce que** le tapis convoyeur continu comprend au moins un moule ouvert uniquement dans sa partie supérieure et constitué d'au moins un matériau élastomère ayant une température de transition vitreuse inférieure à 0°C, ledit équipement comportant successivement dans sens d'entrainement du tapis convoyeur continu les zones suivantes :
- au moins une zone a) de remplissage des moules,
- au moins une zone b) d'apport de froid,
- au moins une zone c) de démoulage,
- au moins une zone d) de remise en forme du moule.

2. Equipement pour la congélation et/ou la surgélation et/ou cryogénisation en portions de produits liquides ou pâteux selon la revendication 1, **caractérisé en ce que** le matériau élastomère ayant une température de transition vitreuse inférieure à 0°C du moule est choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM).

3. Equipement pour la congélation, la surgélation et/ou la cryogénisation en portions de produits liquides ou pâteux selon l'une quelconque des revendications précédentes, **caractérisé en ce que** le matériau élastomère présente une température de transition vitreuse comprise dans un intervalle allant de -120°C à 0°C.

4. Equipement pour la congélation, la surgélation et/ou la cryogénisation en portions de produits liquides ou pâteux selon l'une quelconque des revendications précédentes, **caractérisé en ce que** le matériau élastomère présente une température de transition vitreuse comprise dans un intervalle allant de -120°C à -60°C.

5. Equipement pour la congélation, la surgélation et/ou la cryogénisation en portions de produits liquides ou pâteux selon l'une quelconque des revendications précédentes, **caractérisé en ce que** le matériau élastomère comprend un mélange ou un copolymère d'élastomère de silicone et d'au moins un autre matériau élastomère.

6. Equipement pour la congélation, la surgélation et/ou la cryogénisation en portions de produits liquides ou pâteux selon l'une quelconque des revendications précédentes, **caractérisé en ce que** le matériau élastomère comprend un mélange ou un copolymère d'élastomère de silicone et d'au moins un autre matériau élastomère choisi dans le groupe comprenant les élastomères nitriles, les copolymères butadiène-acrylonitrile, le NBR, les élastomères fluorocarbonés, le chloroprène, les élastomères d'alcools polyvinyliques, les latex et/ou les caoutchoucs, notamment le caoutchouc nitrile, et/ou le caoutchouc éthylène-propylène-diène (EPDM).

7. Equipement pour la congélation et/ou la surgélation de produits liquides ou pâteux en portions selon l'une quelconque des revendications précédentes, **caractérisé en ce que** la zone b) d'apport de froid est à une température inférieure à la température de transition vitreuse du matériau élastomère.

8. Equipement pour la congélation et/ou la surgélation de produits liquides ou pâteux en portions selon l'une quelconque des revendications précédentes, **caractérisé en ce que** la zone c) de démoulage est à une température supérieure à la température de transition vitreuse du matériau élastomère.

9. Equipement pour la congélation et/ou la surgélation de produits liquides ou pâteux en portions selon l'une quelconque des revendications précédentes, **caractérisé en ce que** la zone c) de démoulage comprend au moins un moyen de démoulage mécanique et/ou au moins un moyen d'amener le moule à une température supérieure à sa température de transition vitreuse.

10. Equipement pour la congélation et/ou la surgélation de produits liquides ou pâteux en portions selon l'une quelconque des revendications précédentes, caractérisé en que ce l'équipement est apte à la réalisation de produits simples, multicouches, concentriques, twistés, et/ou de textures /ou de consistances différentes.

11. Procédé de fabrication automatisé de portions obtenues par congélation, surgélation et/ou cryogénisation de produits liquides ou pâteux comprenant ou non au moins un élément solide, comprenant au moins les étapes de :
1. Remplissage avec au moins un produit liquide ou pâteux comprenant ou non au moins un élément solide, d'au moins un moule ouvert uniquement dans sa partie supérieure et constitué d'au moins un matériau élastomère ayant une température de transition vitreuse inférieure à 0°C,
2. Congélation, surgélation et/ou cryogénisation,
3. Démoulage,
4. Remise en forme du moule,
5. Retour vers la zone de remplissage.

12. Procédé selon la revendication 11, **caractérisé en ce qu'**il est mis en oeuvre dans un équipement tel que défini dans l'une quelconque des revendications 1 à 10.

13. Procédé selon l'une quelconque des revendications 11 à 12, **caractérisé en ce que** l'étape 2. de congélation, de surgélation et/ou de cryogénisation est réalisée à une température comprise dans un intervalle allant de -90°C à -50°C.

14. Procédé selon l'une quelconque des revendications 11 à 13, **caractérisé en ce que** l'étape 2. de congélation, de surgélation et/ou de cryogénisation est réalisée à une température comprise dans un intervalle allant de -85°C à -65°C.

15. Procédé selon l'une quelconque des revendications 11 à 14, **caractérisé en ce que** l'étape 2. de congélation, de surgélation et/ou de cryogénisation est **caractérisée en ce que** le temps de congélation, de surgélation et/ou de cryogénisation est compris dans un intervalle allant de 3 à 20 minutes.
